# FASCICULE DE BREVET EUROPEEN

(11) **EP 3 662 569 B1**
(45) Date de publication et mention de la délivrance du brevet: **17.02.2021**
(21) Numéro de dépôt: 18762364.0
(22) Date de dépôt: 02.08.2018
(51) Int. Cl.: H02M 1/38, H02M 7/53846, H02M 7/53862, H02M 7/5387, H02P 7/285

(54) **PROCÉDÉ DE COMMANDE D'UN ONDULEUR**
VERFAHREN ZUR STEUERUNG EINES UMRICHTERS
METHOD FOR CONTROLLING AN INVERTER

(30) Priorité: 02.08.2017 FR 1757432
(43) Date de publication de la demande: 10.06.2020
(73) Titulaire: Safran Electrical & Power, 31702 Blagnac Cedex (FR)
(72) Inventeur: BOURSE, Wenceslas, 31700 Blagnac (FR); TOUTAIN, Pascal Jacques Frédéric Guy, 31700 Blagnac (FR)
(74) Mandataire: Regimbeau
(86) Numéro de dépôt international: PCT/FR2018/052006
(87) Numéro de publication internationale: WO 2019/025740

(56) Documents cités:
- EP-A1- 2 605 400
- US-A- 4 528 486
- US-A1- 2016 211 772

## Description

### DOMAINE DE L'INVENTION

L'invention concerne un procédé de commande d'un onduleur comprenant une pluralité de commutateurs propres à être commandés en ouverture/fermeture pour la régulation de l'alimentation électrique d'un moteur.

Ce procédé est en particulier destiné à être mis en œuvre pour piloter l'alimentation électrique d'un moteur d'un ventilateur à bord d'un aéronef.

### ETAT DE LA TECHNIQUE

Les aéronefs, et en particulier les avions commerciaux, comprennent un grand nombre d'équipements électriques destinés à l'assistance au pilotage et au confort des passagers. Ces équipements incluent notamment des ventilateurs destinés à des systèmes de refroidissement et de ventilation avioniques. Les aéronefs comprennent un réseau électrique pour l'alimentation en tension de ces différents équipements. La tension électrique est fournie au réseau au moyen de générateurs de tension installés dans les moteurs (à propulsion ou à réaction) de l'aéronef. La tension électrique transportée par le réseau est généralement une tension alternative, des redresseurs permettant de convertir cette tension alternative en une tension continue afin d'alimenter les équipements nécessitant une telle tension d'alimentation continue.

Les ventilateurs comprennent ainsi le plus souvent un redresseur en entrée pour obtenir une tension d'entrée continue, le redresseur étant suivi d'un onduleur commandé par un module de commande pour réguler l'alimentation en tension alternative du moteur du ventilateur, de façon à pouvoir piloter la vitesse de rotation des pales du ventilateur.

Un tel onduleur comporte une pluralité de commutateurs, dont chaque commutateur est adapté, par exemple, pour être en position fermée lorsqu'un signal de commande qui lui est appliqué prend la valeur logique « 1 », et pour être en position ouverte lorsqu'un signal de commande qui lui est appliqué prend la valeur logique « 0 ».

Les états (ouvert ou fermé) de l'ensemble des commutateurs pour un secteur angulaire déterminé du moteur sont commandés selon des lois de commande. L'ensemble des lois de commandes définit une table de commandes de l'onduleur Un tel onduleur est connu du document EP2605100 A1.

Dans le cadre d'un onduleur triphasé, des lois de commande ont par exemple été développées spécifiquement afin d'optimiser le rendement (électrique et thermique) et le niveau de perturbation électromagnétique de l'onduleur triphasé utilisé en commande à 120°. De ce fait, il existe une pluralité de lois de commande.

Un commutateur possède un temps de mise en conduction et de mise en dé-conduction maximum. Pour la conduction, cette durée correspond au temps maximal avant lequel le commutateur entre en conduction suite à la réception de l'ordre de commutation par un signal de commande. Réciproquement, pour la dé-conduction, cette durée correspond au temps maximal avant lequel le commutateur cesse de conduire suite à l'arrêt de l'ordre de dé-commutation par un signal de commande. Deux aspects distincts sont à considérer :
- un ordre de commutation/dé-commutation qui est inférieur au temps maximum de conduction/dé-conduction est interdit, car cela peut endommager le commutateur, et générer de la pollution électromagnétique ; et
- les circuits « driver de commutateurs » généralement utilisés ont des fonctions de protection dites de désaturation qui se déclenchent de façon erratique dans le cas d'un ordre de commutation qui est inférieur au temps maximum de conduction/dé-conduction.

Pour ces raisons, un système mettant en œuvre une loi de commande de l'onduleur doit interdire la génération d'ordres de commutation/dé-commutation non conformes, notamment, à la spécification des commutateurs utilisés. Ainsi, plus globalement, la gestion des temps de conduction/dé-conduction est dépendante de :
- la référence des composants de puissance utilisés (IGBT, MOSFET) ; et
- la loi de commande utilisée pour le contrôle de l'onduleur.

Ainsi, dans le cas d'une loi de commande à 120°, la mise en œuvre de la fonction de gestion des temps de conduction/dé-conduction est rendue complexe par :
- la variété de référence des composants de puissance utilisés (IGBT, MOSFET adapté pour des réseaux continus 270Vdc, 540Vdc, 28Vdc) ;
- la variété des lois de commande, chaque système ayant ses propres spécificités; et
- le caractère indéterministe des changements de secteur du moteur qui est l'élément d'entrée de la table de commandes qui définit l'ordre des commutations successives des interrupteurs.

La mise en œuvre d'une nouvelle loi de commande de l'onduleur est donc rendue complexe par la multiplicité des paramètres décrits ci-avant. En effet, la réalisation d'une telle loi nécessite des efforts importants de spécification et de test pour éviter les erreurs de conception lors de la mise en œuvre de fonctions spécifiques de gestion des temps de conduction/dé-conduction des commutateurs de l'onduleur, permettant d'assurer la sécurité des composants de l'onduleur.

### PRESENTATION DE L'INVENTION

L'invention a pour but de proposer un procédé de commande d'un onduleur qui soit adapté quel que soit le type de loi de commande ou de référence de commutateur, et qui soit en mesure de gérer avec fiabilité et robustesse l'aspect non-prédictible des changements de position du moteur.

En particulier, un but de l'invention est de proposer un procédé de commande d'un onduleur permettant d'assurer la gestion des temps de conduction/dé-conduction des commutateurs de l'onduleur.

Un autre but de l'invention est de permettre d'implémenter une telle solution pour tout type de loi de commandes d'un onduleur.

Le but est atteint dans le cadre de la présente invention grâce à un procédé de commande d'un onduleur configuré pour alimenter électriquement un moteur comprenant un stator et un rotor adapté pour être entrainé en rotation relativement au stator lorsque le moteur est alimenté électriquement, l'onduleur comprenant une pluralité de commutateurs propres à être commandés en ouverture/fermeture pour la régulation de l'alimentation électrique du moteur, chaque commutateur présentant un temps de transition Toff prédéterminé d'un état fermé vers un état ouvert, et un temps de transition Ton prédéterminé de l'état ouvert vers l'état fermé, le procédé comprenant les étapes suivantes consistant à:
- générer un premier signal numérique continu présentant un premier niveau de tension propre à commander la fermeture d'un commutateur,
- générer un deuxième signal numérique continu présentant un deuxième niveau de tension propre à commander l'ouverture d'un commutateur,
- générer un troisième signal numérique cyclique alternant entre le premier niveau de tension et le deuxième niveau de tension, propre à commander successivement la fermeture et l'ouverture d'un commutateur,
- transmettre à chaque commutateur l'un des signaux numériques, conformément à une loi de commande dépendante d'une position du rotor relativement au stator, et
- lors d'un changement de position du rotor relativement au stator à un instant t0, retarder l'exécution de la loi de commande correspondant à la nouvelle position du rotor, depuis l'instant t0, tant que ladite exécution produirait une commande d'ouverture de l'un des commutateurs au cours d'une transition de l'état ouvert à l'état fermé (violation Ton), ou une commande de fermeture de l'un des commutateurs au cours d'une transition de l'état fermé à l'état ouvert (violation Toff) dudit commutateur.

Ledit procédé permet ainsi de mettre en œuvre facilement et rapidement des nouvelles lois de commandes, et assurer la sécurité des composants de l'onduleur en évitant les erreurs de conception lors de l'application de fonctions spécifiques de gestion des temps de conduction/dé-conduction en gérant avec fiabilité et robustesse l'aspect non-prédictible des changements de position du moteur.

Avantageusement, mais facultativement, le système selon l'invention peut en outre comprendre au moins l'une des caractéristiques suivantes :
- le troisième signal numérique est transmis simultanément à un ou plusieurs commutateurs de la pluralité de commutateurs ;
- l'exécution de la loi de commande est retardée si :
   - l'un des commutateurs étant commandé par le premier signal numérique continu, la loi de commande indique la transmission audit commutateur du troisième signal numérique cyclique, et à l'instant t0, ledit signal est égal au deuxième niveau de tension et dans un temps inférieur au temps de transition Toff entre l'état fermé et ouvert, égal au premier niveau de tension ; ou
   - l'un des commutateurs étant commandé par le second signal numérique continu, la loi de commande indique la transmission audit commutateur du troisième signal numérique cyclique, et à l'instant t0, ledit signal est égal au premier niveau de tension et dans un temps inférieur au temps de transition Ton entre l'état ouvert et l'état fermé, égal au second niveau de tension ; ou
   - l'un des commutateurs étant commandé par le troisième signal numérique cyclique , la loi de commande indique la transmission audit commutateur du premier signal numérique continu, et à l'instant t0, ledit commutateur est en transition de l'état fermé vers l'état ouvert depuis un temps inférieur à Toff; ou
   - l'un des commutateurs étant commandé par le troisième signal numérique cyclique , la loi de commande indique la transmission audit commutateur du second signal numérique continu, et à l'instant t0, ledit commutateur est en transition de l'état ouvert vers l'état fermé depuis un temps inférieur à Ton;
- le troisième signal numérique cyclique de commande est un signal à modulation de largeur d'impulsion;
- chaque commutateur de l'onduleur est commandé par une loi de commande associée, ladite loi de commande étant une loi de commande à 120°; et
- le moteur comprend une pluralité de secteurs angulaires définis de manière fixe par rapport au stator et parcourus par le rotor lorsque le rotor est entrainé en rotation, et en ce que la détection du changement de position du rotor relativement au stator se produit à chaque changement de secteur angulaire.

L'invention a également pour objet un module de commande d'un onduleur configuré pour alimenter électriquement un moteur, l'onduleur comprenant une pluralité de commutateurs commandés en ouverture/fermeture pour la régulation de l'alimentation électrique du moteur, chaque commutateur présentant un temps de transition prédéterminé Toff entre un état fermé et un état ouvert, et un temps de transition Ton prédéterminé entre l'état ouvert et l'état fermé,
le moteur comprenant un stator et un rotor adapté pour être entraîné en rotation relative par rapport au stator, ledit module de commande étant adapté pour :
- générer un premier signal numérique continu présentant un premier niveau de tension propre à commander la fermeture d'un commutateur,
- générer un deuxième signal numérique continu présentant un deuxième niveau de tension propre à commander l'ouverture d'un commutateur,
- générer un troisième signal numérique cyclique alternant entre le premier niveau de tension et le deuxième niveau de tension, propre à commander successivement la fermeture et l'ouverture d'un commutateur, à une fréquence prédéterminée,
- transmettre à chaque commutateur l'un des signaux numériques, conformément à une loi de commande dépendante d'une position du rotor relativement au stator ;
ledit module de commande étant en outre adapté pour détecter un changement d'angle du rotor relativement au stator,
et ledit module étant configuré pour retarder l'exécution, depuis un instant t0 de détection de changement de position du rotor relativement au stator,
et ledit module de commande étant configuré pour retarder l'exécution, depuis l'instant t0 de détection du changement de position du rotor, de la loi de commande des commutateurs commandant pour la nouvelle position du rotor, la transmission du troisième signal numérique cyclique à un commutateur, et la transmission du premier ou du deuxième signal à un autre commutateur, tant que ladite exécution produirait une commande d'ouverture de l'un des commutateurs au cours d'une transition de l'état ouvert à l'état fermé (violation Ton), ou une commande de fermeture de l'un des commutateurs au cours d'une transition de l'état fermé à l'état ouvert (violation Toff) dudit commutateur.

L'invention a également pour objet un système d'alimentation électrique d'un moteur, le moteur comprenant un stator et un rotor monté rotatif par rapport au stator, le système d'alimentation comprenant:
- un onduleur, comprenant une pluralité de commutateurs commandés pour la régulation de l'alimentation électrique du moteur ;
- un module de commande de l'onduleur selon les caractéristiques précédemment décrites ;
- un capteur propre à mesurer une position du rotor relativement au stator, ledit module de commande étant un module de commande tel que défini précédemment ;
- dans lequel l'onduleur est un onduleur triphasé; et
- dans lequel le module de commande est adapté pour identifier un secteur angulaire du moteur dans lequel est localisé le rotor en fonction de la position mesurée par le capteur, et en ce que le module de commande est adapté pour détecter un changement de position lorsque le rotor change de secteur angulaire.

Le procédé et le système proposés permettent donc d'implémenter facilement et rapidement des nouvelles lois de commandes, tout en gérant avec fiabilité et robustesse l'aspect non-prédictible des changements de position du moteur.

### DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :
- la figure 1 représente de manière schématique un système d'alimentation électrique d'un moteur selon un mode de réalisation de l'invention ;
- la figure 2A représente un signal numérique cyclique ;
- la figure 2B représente un signal numérique cyclique filtré selon l'invention ;
- les figure 3A et 3C représentent une table de lois de commande d'un onduleur ;
- les figure 3B et 3D représentent une table de transitions des commandes d'un onduleur selon un mode de réalisation de l'invention ;
- les figures 4A et 4B illustrent de manière schématique la commande de commutateurs selon des signaux de commande ;
- la figure 5 représente un module de commande des commutateurs d'un onduleur selon un mode de réalisation de l'invention ;
- la figure 6 représente des signaux relatifs à un signal de commande cyclique selon un mode de réalisation de l'invention ; et
- la figure 7 représente schématiquement les principales étapes d'un procédé de commande mis en œuvre par le module de commande selon un mode de réalisation de l'invention.

### DESCRIPTION DETAILLEE D'AU MOINS UN MODE DE REALISATION DE L'INVENTION

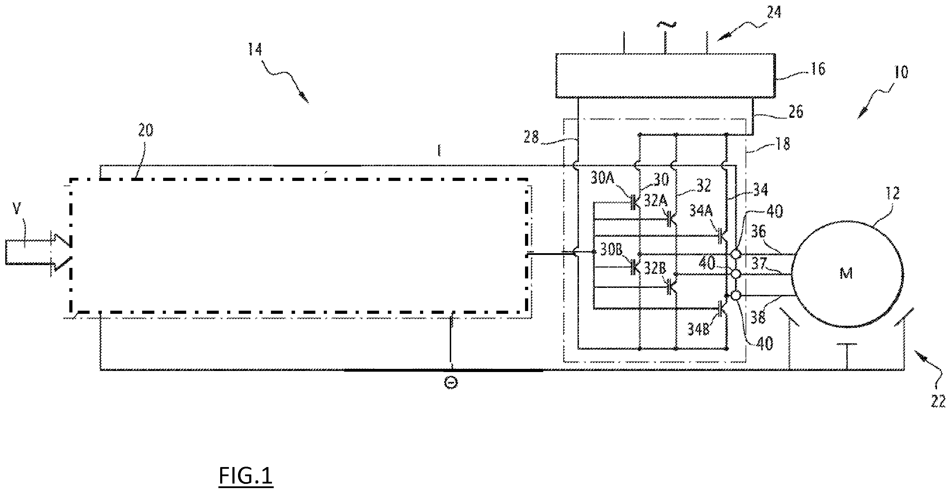

En référence à la **figure 1****,** un ventilateur 10 comprend un moteur 12 électrique et un système 14 d'alimentation électrique du moteur 12. De façon connue, le moteur 12 comprend un stator (non représenté) et un rotor (non représenté) monté rotatif par rapport au stator. Le rotor porte des aimants permanents, ou un bobinage. Des bobinages (non représentés), portés par le stator, sont adaptés pour générer un champ magnétique sous l'effet duquel le rotor est entraîné en rotation relativement au stator. Le rotor est sensiblement cylindrique et le stator s'étend sensiblement coaxialement autour ou à l'intérieur du rotor. Le rotor est adapté pour tourner autour de son axe. Un angle est défini entre le stator et le rotor par rapport à une position de référence du rotor relativement au stator. Le système d'alimentation 14 comprend un redresseur 16, un onduleur 18 propre à alimenter électriquement le moteur 12, un filtre (non représenté) du redresseur 16 entre ledit redresseur 16 et l'onduleur 18, un module 20 de commande de l'onduleur 18, et un capteur 22 pour mesurer l'angle G du rotor du moteur 12 relativement au stator.

Le capteur 22 est typiquement un capteur à effet Hall adapté pour déterminer l'angle du rotor en fonction de l'orientation du champ magnétique vue par le capteur 22. En particulier, le moteur 12 est découpé en secteurs angulaires (non représentés), et le capteur 22 est adapté pour identifier dans quel secteur angulaire se trouve l'angle formé entre le rotor et le stator. Le nombre de secteurs angulaires est par exemple égal à six. Le redresseur 16 est intercalé entre un réseau électrique 24, typiquement un réseau électrique d'aéronef, et l'onduleur 18. Ce dernier est adapté à convertir la tension alternative convoyée par le réseau électrique 24 en une tension sensiblement continue d'alimentation de l'onduleur 18. Le redresseur 16 est raccordé électriquement à l'onduleur 18 via une ligne positive 26, à un potentiel positif sensiblement constant, et via une ligne négative 28, à un potentiel négatif sensiblement constant. L'onduleur 18 comprend comporte trois branches de commutation 30, 32, 34 montées en parallèle entre les lignes positives 26 et négatives 28. Chaque branche, respectivement 30, 32, 34, comporte deux commutateurs commandés, respectivement 30A, 30B, 32A, 32B, 34A, 34B, montés en série et entre lesquels est raccordée une ligne de sortie, respectivement 36, 37, 38, pour l'alimentation du moteur 12. En particulier, les lignes de sortie 36, 37, 38 sont adaptées pour alimenter les bobinages du stator en courant électrique. Dans l'exemple de réalisation de la **figure 1****,** chaque ligne de sortie 36, 37, 38 correspond à une phase de l'alimentation triphasée du moteur 12.

Pour chaque branche, respectivement 30, 32, 34, un premier commutateur, respectivement 30A, 32A, 34A, est disposé entre la ligne positive 26 et la ligne de sortie, respectivement 36, 37, 38, associée, et un deuxième commutateur, respectivement 30B, 32B, 34B, est disposé entre la ligne négative 28 et la ligne de sortie, respectivement 36, 37, 38, associée. Chaque commutateur 30A, 30B, 32A, 32B, 34A, 34B est apte à basculer entre une position fermée, dans laquelle il relie électriquement la ligne positive 26 ou négative 28 à la ligne de sortie 36, 37, 38 associée, et une position ouverte, dans laquelle il isole électriquement lesdites lignes. Chaque commutateur 30A, 30B, 32A, 32B, 34A, 34B est de préférence un transistor, par exemple un transistor bipolaire à grille isolée (en anglais IGBT « Insulated Gate Bipolar Transistor »). Optionnellement, une diode est associée à chaque commutateur 30A, 30B, 32A, 32B, 34A, 34B, en antiparallèle.

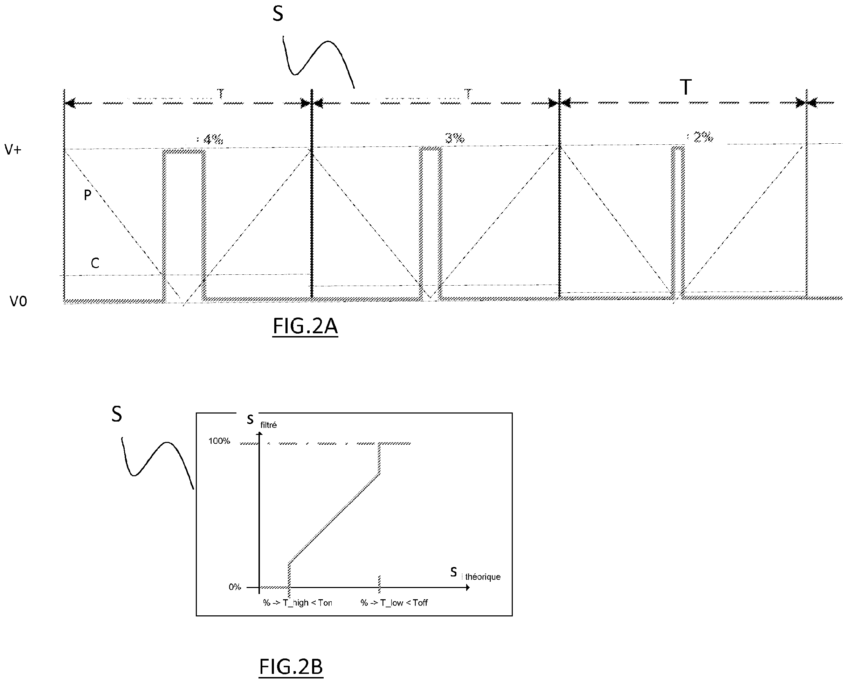

L'onduleur 18 comprend également des capteurs de courant 40 pour mesurer un courant I circulant dans chaque ligne de sortie 36, 37, 38. En variante, l'onduleur 18 comprend un unique capteur de courant 40 entre la ligne négative 28 et le filtre du redresseur 16. Le module de commande 20 est adapté pour générer un signal numérique cyclique S de commande des commutateurs 30A, 30B, 32A, 32B, 34A, 34B, fonction de l'angle mesuré G du rotor relativement au stator et du courant mesuré I circulant dans chaque ligne de sortie 36, 37, 38 (régulation de courant), mais également en fonction de la vitesse calculée par le module de commande 20 via le capteur 22 (régulation de vitesse). Par « signal numérique cyclique » on comprend un signal adapté pour prendre exclusivement deux valeurs en tension Vo, V+, la première valeur de tension V+ correspondant à un « 1 » logique et la seconde valeur de tension V0 correspondant à un « 0 » logique, la première valeur étant supérieure à la deuxième valeur.
Le signal numérique cyclique S alternant entre le premier niveau de tension V+ et le deuxième niveau de tension V0, est donc propre à commander successivement la fermeture et l'ouverture d'un commutateur.
Le signal est ainsi codé sur un seul bit. Le signal est de plus découpé en cycles réguliers, et change de valeur au maximum deux fois au cours de chaque cycle. En particulier, le signal est un signal en créneaux, chaque créneau étant centré sur le milieu d'un cycle du signal. Le signal numérique cyclique de commande S a un rapport cyclique variable, permettant d'adapter la vitesse de rotation du moteur, c'est- à-dire que le rapport entre la durée pendant laquelle le signal S prend la valeur logique « 1 » et la durée pendant laquelle le signal S prend la valeur logique « 0 » au cours de chaque cycle T du signal S varie d'un cycle T à l'autre, comme représenté sur la **figure 2A****.** Le signal numérique cyclique de commande S peut être également saturé comme illustré sur la figure 2B pour ne pas générer d'ordre d'ouverture et de fermeture des commutateurs en violation des temps de mise conduction/dé-conduction d'un des commutateurs. Le signal numérique cyclique de commande S est de préférence de type modulation à largeur d'impulsion (MLI).

Le module de commande 20 est également adapté pour transmettre ledit signal numérique cyclique de commande S sélectivement à chacun des commutateurs 30A, 30B, 32A, 32B, 34A, 34B. En d'autres termes, le module de commande 20 est adapté pour transmettre le signal numérique cyclique de commande S à tous les commutateurs 30A, 30B, 32A, 32B, 34A, 34B. Le module de commande 20 est adapté pour générer et transmettre des signaux numériques continus de commande aux commutateurs 30A, 30B, 32A, 32B, 34A, 34B.

Le module de commande 20 est également adapté pour transmettre un premier signal numérique S0 continu, présentant un premier niveau de tension Vo propre à commander l'ouverture d'un commutateur, et prenant par exemple la valeur logique « 0 » représentative d'un état inactif du signal.

Pareillement, le module de commande 20 est adapté pour transmettre un second signal numérique continu S1, présentant un deuxième niveau de tension V+ propre à commander la fermeture d'un commutateur, et par exemple prenant la valeur logique «1» représentative d'un état actif du signal.

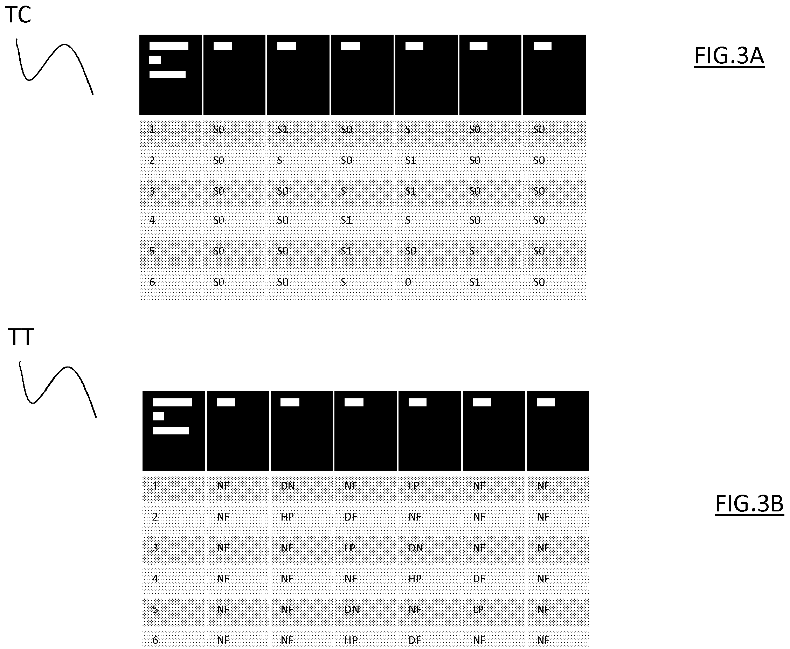

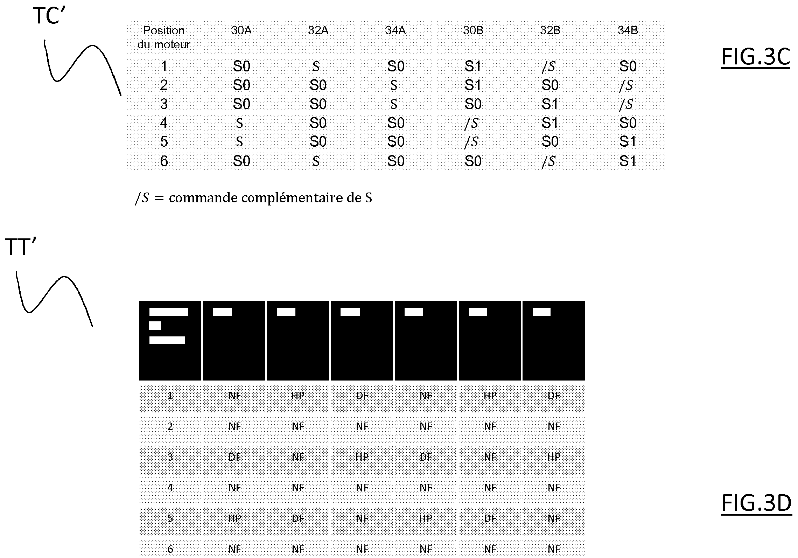

La **figure 3A****,** considérant la table de commandes TC, illustre le passage de la position du moteur n° 2 vers la position du moteur numéro 3. Ainsi, le signal cyclique S est appliqué successivement sur le commutateur 32A puis, dès le changement de secteur angulaire du moteur, sur le commutateur 34A.

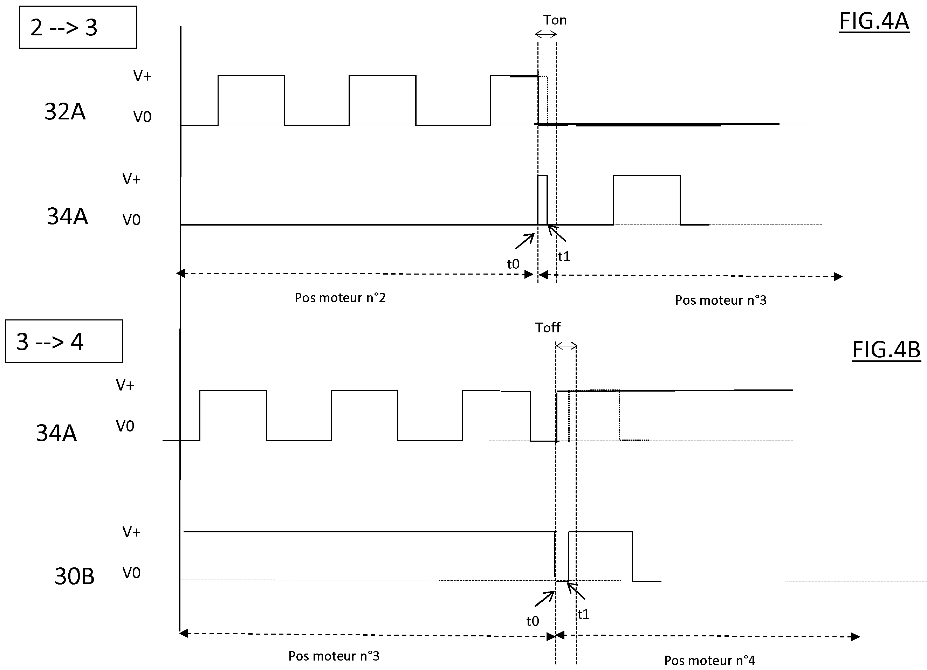

Dans la loi de commande définie par la position du moteur n°2, le commutateur 34 A reçoit un signal inactif S0, il est donc à l'état ouvert. Comme illustré, en **figure 4A****,** le changement de secteur moteur à un instant t0 peut générer une violation du temps de transition entre l'état ouvert et l'état fermé (Ton) sur le commutateur 34A, si ce changement intervient dans une fenêtre, entre un instant t0 où le signal cyclique S est à l'état actif et un instant t1 où le signal cyclique S est à l'état inactif, inférieure à Ton. En effet, le changement de section moteur n'est pas temporellement prédictible, car le fonctionnement du moteur peut être asynchrone. Ainsi, dans ce cas, on observe que le commutateur 34A est commandé à la fermeture à l'instant t0, puis en ouverture à l'instant t1, avant que le temps de transition Ton ne soit écoulé.

Par analogie, le changement de secteur moteur peut générer une violation du temps de transition Ton sur le commutateur 32A, si à un instant t0, un signal continu inactif S0 est appliqué au commutateur alors que le signal S est à l'état actif depuis un temps inférieur à Ton.

La table de commandes TC représente également le cas de transitions du signal cyclique S vers un signal continu actif S1 ou inversement. De telles transitions sont aussi à risque, car susceptibles de générer des violations du temps de transition entre l'état fermé et l'état ouvert des commutateurs (Toff).

Ainsi, dans le cas d'une transition signal cyclique S vers un signal continu actif S1, si la transition intervient à un instant t1, instant du passage d'un état actif à un état inactif, un commutateur est dans une période de dé-conduction. L'envoi d'une commande de passage à un état actif via un signal continu actif S1 entraine donc une violation du temps de transition Toff.

De même, comme illustré en **figure 4B****,** la transition d'un signal constant actif S1 vers un signal cyclique S, à un instant t0 où le signal S est inactif, entraine une violation du temps de dé-conduction Toff d'un commutateur si le délai entre l'instant t0 et un instant t1 de passage à état actif du signal cyclique S est inférieur au temps de transition Toff. En effet, dans ce cas, le commutateur reçoit via le signal cyclique S, une commande de passage de l'état actif vers l'état inactif, puis de l'état inactif vers l'état actif dans un délai inférieur au temps de transition Toff.

La **figure 3C** représente une table de commandes TC' dans laquelle le signal cyclique S est appliqué sur une pluralité de commutateurs pour une position du moteur donnée. Un signal cyclique peut être sous la forme d'un signal /S, complémentaire du signal cyclique S.

La **figure 3B** illustre une table de transitions TT, associée à une table de commandes TC correspondant à un ensemble de loi de commandes des commutateurs en fonction de la position du moteur. Les lois de commandes se succèdent dans un ordre prédéterminé correspondant à l'enchainement des positions du moteur. De même, la figure 3B illustre une table de transitions TT', associée à une table de commandes TC'.
En fonction d'une table de lois de commande TC/TC', on configure, par exemple de façon automatique, la table de transitions TT/TT', de dimension identique à la table de commandes TC/TC'. Ladite table de transitions TT/TT' indique, pour chaque commutateur, à chaque position moteur, la transition à venir entre une première loi de commande et une seconde loi de commande successive. Ainsi, la table de transitions TT/TT' comprend les constantes suivantes :
- NF : Cas des transitions d'un signal continu vers un autre signal continu, ce cas ne pose pas de problèmes de violation des temps de transition ;
- HP : Cas des transitions d'un signal cyclique S vers un signal continu inactif S0, ces transitions peuvent induire des violations des temps de transition Ton ;
- LP : Cas des transitions d'un signal cyclique S vers un signal continu actif S1, ces transitions peuvent induire des violations des temps de transition Toff ;
- DF : Cas des transitions d'un signal continu inactif vers un signal cyclique S, ces transitions peuvent induire des violations des temps de transition Ton ;
- DN : Cas des transitions d'un signal continu actif vers un signal cyclique S. Ces transitions peuvent induire des violations des temps de transition Toff.

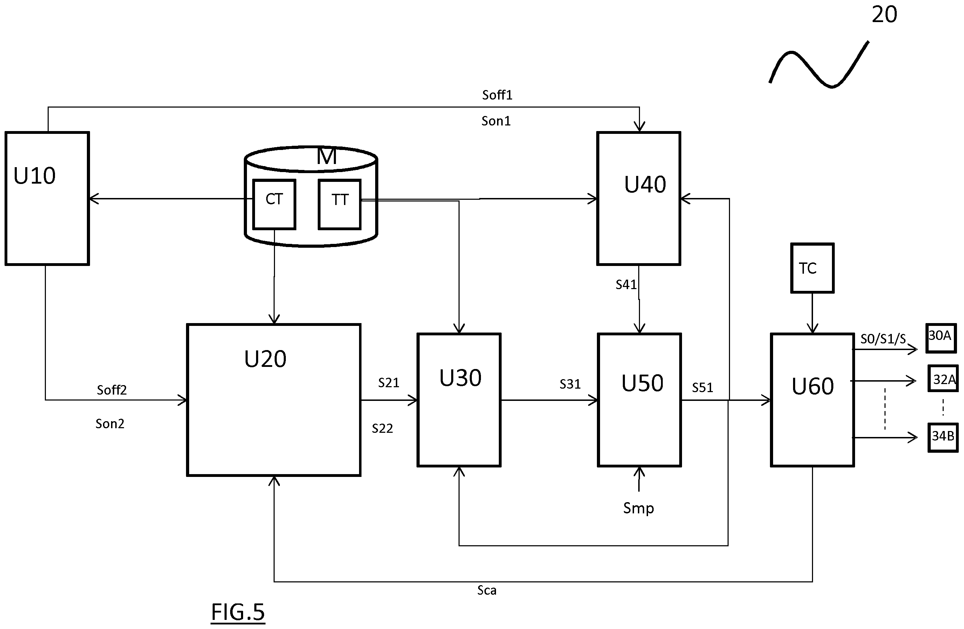

En référence à la **figure 5****,** le module de commande 20 comprend une unité de génération de signaux U10.

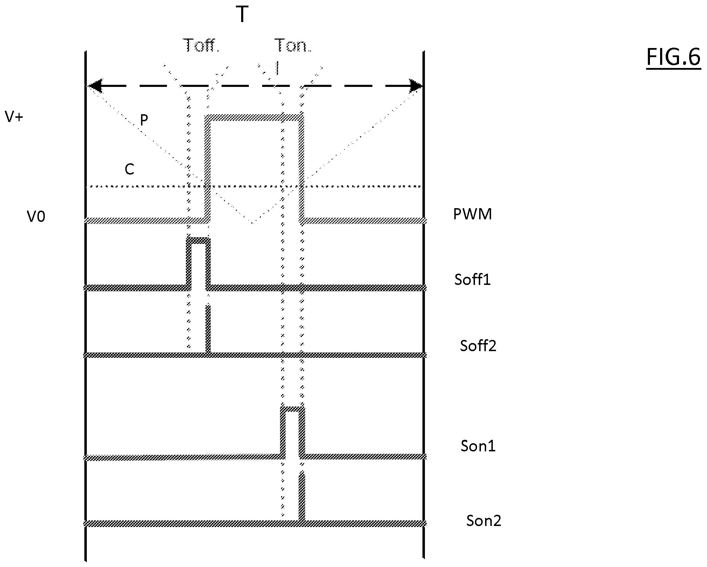

La **figure 6** illustre également les principales étapes d'un procédé de commande d'un onduleur, permettant la gestion des temps de transition, et mis en œuvre par le module de commande 20.

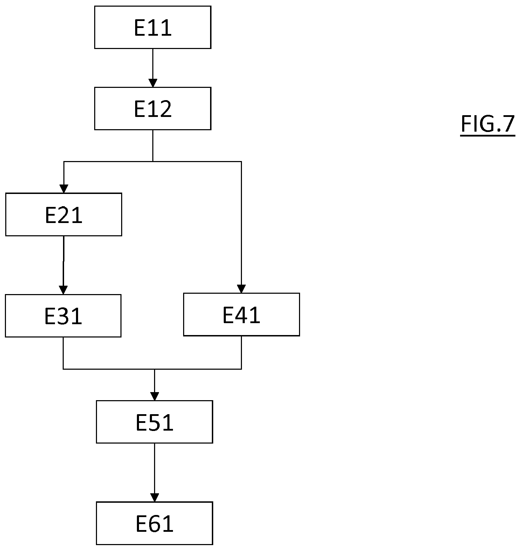

Ladite unité U10 génère dans une étape E11 un signal cyclique S par une comparaison entre une porteuse triangulaire P décroissante ou croissante de période T et une valeur de consigne C issue d'un régulateur de type proportionnel intégral (régulateur qui peut être de vitesse ou de courant), comme illustré en **figure 7** dans le cas d'une porteuse décroissante P. Dans le cas d'une porteuse décroissante P, le signal cyclique S est mis à l'état actif si la porteuse triangulaire est inférieure à la consigne sinon inactif. Réciproquement, dans le cas d'une porteuse croissante, le signal cyclique S est mis à l'état actif si la porteuse triangulaire est supérieure à la consigne sinon à l'état inactif.

Les valeurs des temps de transition Toff et Ton sont stockées dans une mémoire M sous la forme de constantes CT. Ces valeurs sont définies par les caractéristiques des composants des commutateurs.

Ladite unité U10 génère également dans une étape E12 une pluralité de signaux caractéristiques de différents instants du signal cyclique S, pouvant être déterminés en fonction des valeurs des temps de transition Toff et Ton.

La **figure 6** illustre la génération de ladite pluralité de signaux (seul le cas d'une porteuse décroissante est décrit, le cas d'une porteuse croissante est obtenu par analogie) :
- Soff1 : Ce signal est positionné à l'état actif lorsque la porteuse triangulaire P est dans l'intervalle suivant, sinon inactif : valeur de consigne C + Toff ≥ porteuse triangulaire P ≥valeur de consigne C. Le signal Soff1 informe que le signal cyclique S passera à l'état actif dans un délai inférieur au temps de transition Toff. Ce signal permet donc la gestion des cas des transitions DN (transition d'un signal continu actif S1 vers un signal cyclique S) d'une table de commandes.
- Son1 : Ce signal est positionné à l'état actif lorsque la porteuse triangulaire P est dans l'intervalle suivant, sinon inactif : valeur de consigne C - Ton ≤ porteuse triangulaire P ≤valeur de consigne C. Le signal Son1 informe que le signal cyclique S passera à l'état inactif dans un délai inférieur au temps de transition Ton. Ce signal permet donc d'indiquer le cas des transitions DF (transition d'un signal continu inactif S0 vers un signal cyclique S) d'une table de commandes.
- Soff2 : Ce signal est positionné à l'état actif lorsque la porteuse triangulaire est dans sa phase descendante égale à la valeur de consigne C, sinon inactif. Cet instant correspond à la mise à l'état actif du signal cyclique S. Le signal Soff2 informe que le signal cyclique S vient de passer à l'état actif. Ce signal permet donc d'indiquer le cas des transitions HP (transition d'un signal cyclique S vers un signal continu inactif S0) d'une table de commandes.
   - Son2 : Ce signal est positionné à l'état actif lorsque la porteuse triangulaire est dans sa phase montante égale à la valeur de consigne C, sinon inactif. Cet instant correspond à la mise à l'état inactif du signal cyclique S.

Le signal Son2 informe que le signal cyclique S vient de passer à l'état inactif. Ce signal permet donc d'indiquer le cas des transitions LP (transition d'un signal cyclique S vers un signal continu actif S1) d'une table de commandes.

Les signaux Soff2 et Son2 sont ensuite transmis à une unité compteur U20. Ladite unité compteur U20 comprend une pluralité de compteurs associés à chaque commutateur. Ainsi, un commutateur est associé à deux compteurs, un compteur de temps de transition Ton et un compteur de temps de transition Toff. Les compteurs sont déclenchés uniquement pour le(s) commutateur(s) sur lequel(s) le signal cyclique S est appliqué (commutateur(s) dit(s) en cours de découpage Ca) selon la table de commandes pour une position du moteur donné. L'unité U20 est adaptée à déterminer le(s) commutateur(s) en cours de découpage par la réception d'un signal Sca fonction de la position du moteur, dont l'origine est détaillée ci-après dans la description. Un compteur de temps de transition Ton est déclenché par le signal Soff2 pour un commutateur Ca qui est en phase de découpage selon la table de commandes utilisée. Réciproquement, le compteur de temps de transition Toff est déclenché par le signal Son2 pour le(s) commutateur(s) Ca selon la table de commandes utilisée.

Dans une étape E21, l'unité compteur U20 génère deux signaux de sortie S21 et S22. Ces signaux sont par exemple encodés par un nombre de bits correspondant au nombre de commutateurs. Un bit donné étant associé à un commutateur donné. Les bits correspondant aux commutateurs qui ne sont pas en cours de découpage sont à l'état actif (égales à 1). Dans le signal S21, le bit associé à un commutateur Ca est à l'état actif si et seulement si un temps de temps de transition Ton s'est écoulé depuis la dernière activation du signal Soff2 sinon inactif.

Réciproquement, dans le signal S22, le bit associé à un commutateur Ca est à l'état actif si et seulement si un temps de temps de transition Toff s'est écoulé depuis la dernière activation du signal Son2, sinon inactif.

Ainsi, les signaux de sortie S21 et S22 informent si un commutateur Ca est commandé à l'état actif depuis un temps supérieur à Ton ou piloté à l'état inactif depuis un temps supérieur à Toff.

Cette information permet de gérer le cas des transitions d'un signal cyclique S vers un signal continu inactif S0 ou actif S1 (transition HP ou LP) de la table de commandes.

Ces signaux sont donc émis vers une unité de transition du signal cyclique U30 prenant également en compte l'état des transitions à venir des commutateurs. Ainsi, l'unité de transition du signal cyclique U30 est configurée pour :
- recevoir les couples de signaux S21 et S22 issus de l'unité compteur U20 ;
- recevoir un signal indiquant la position du moteur S51 dont l'origine est détaillée ci-après dans la description ; et
- accéder à la table des transitions TT.

L'unité de transition du signal cyclique U30 est composée par exemple d'un démultiplexeur qui alloue à son signal de sortie S31, en fonction de la position du moteur S51 et du contenu de la table des transitions TT, l'état du signal S21 ou S22 ou la valeur de l'état actif (par exemple 1).

Par la connaissance de la position du moteur, l'unité de transition du signal cyclique U30 se positionne dans la table des transitions TT et détermine donc les transitions à venir pour chaque commutateur.

Ainsi pour chaque commutateur, l'unité U30 détermine en fonction de la position du moteur, la nature de la transition à venir. Puis dans le cas de transition HP ou LP, l'unité de filtrage transmet respectivement la valeur du signal S21 ou S22. Dans le cas où une autre transition est appliquée, la valeur 1 est transmise.

Ainsi, en sortie de cette unité, par exemple dans le cas où le signal S31 est codé sur une pluralité de bits égale au nombre de commutateurs, il est défini comme suit :
- Tous ses bits (un pour chaque commutateur) sont à l'état actif
   - si pour une transition HP (signal cyclique S vers un signal continu inactif S0), le temps de transition Ton est dépassé sur le(s) commutateur(s) Ca en court de découpage ou réciproquement,
   - si pour une transition LP (signal cyclique S vers un signal continu actif S1), le temps de transition Toff est dépassé sur le(s) commutateur(s) en court de découpage.
- Dans le cas contraire, si une violation de temps de transition Ton ou Toff est possible, le bit associé à un commutateur Ca en court de découpage est à l'état inactif.

Ainsi, les unités U20 et U30 permettent de déterminer pour le(s) commutateur(s) Ca recevant un signal cyclique S, si celui-ci est hors d'un temps d'ouverture ou de fermeture et donc susceptible d'être commandé en fermeture ou ouverture sans provoquer de violation des temps de transition.

Une unité de transition des signaux continus U40, permet quant à elle de gérer les temps de transition lors du changement de position moteur pour un commutateur devant recevoir le signal cyclique S. Ainsi, une unité de filtrage de délai U40 est configurée pour:
- recevoir les 2 signaux Soff1 et Son1 transmis par l'unité U10 ;
- recevoir un signal indiquant la position du moteur S51 ; et
- accéder à la table des transitions TT.

L'unité des signaux continus U40 est un démultiplexeur qui alloue à son signal de sortie S41, en fonction de la position du moteur S51 et du contenu de la table des transitions TT l'état de Soff1 et Son1 ou la valeur de l'état inactif (par exemple 0).

Ainsi, par la connaissance de la position du moteur, l'unité des signaux continus U40 se positionne dans la table de filtrage et détermine donc les transitions à venir pour chaque commutateur. L'unité des signaux continus U40 détermine donc en fonction de la position du moteur, la nature de la transition à venir. Puis si ce filtre correspond à une transition DN (signal continu actif vers le signal cyclique S) ou DF (signal continu inactif vers le signal cyclique S), l'unité U40 transmet respectivement la valeur du signal Son1 ou Soff1. Dans le cas où une autre transition est appliquée, la valeur 0 est transmise.

Subséquemment, dans une étape E41 parallèle aux étapes E21 et E31, en sortie de cette unité, par exemple dans le cas où le signal S41 est codé sur une pluralité de bits égale au nombre de commutateurs, il est défini comme suit :
- Tous ses bits (un pour chaque commutateur) sont à l'état inactif
   - si pour une transition DN (signal continu actif S1 vers le signal cyclique S), le signal cyclique S n'est pas à un temps Toff de passer à l'état actif ou réciproquement,
   - si pour une transition DF (signal continu inactif S0 vers le signal cyclique S), le signal cyclique S n'est pas à un temps Ton de passer à l'état inactif.
- Dans le cas contraire, si une violation du temps de transition Ton ou Toff est possible, le bit associé à un commutateur qui va entrer en découpage est à l'état actif.

Ensuite, une unité position moteur U50 est configuré pour recevoir les différents signaux des unités U30 et U40. Ladite unité U50 est également configurée pour recevoir un signal représentant la position du moteur Smp. Le positionnement du moteur est par exemple transmis par les capteurs de secteur angulaire 22.

Dans une étape E51, le signal de sortie S51 de l'unité position moteur U50 est égal au signal Smp si et seulement si :
- l'intégralité des bits du signal S31 sont actifs. C'est-à-dire qu'il n'y a pas de risque de violation des temps de transition Ton et Toff sur les transitions HP (signal cyclique S vers un signal continu inactif S0) et transition LP (signal cyclique S vers un signal continu actif S1) de la table de commandes et cela en fonction de la position courante du moteur et de la transition à venir.
- l'intégralité des bits du signal S41 sont inactifs. C'est-à-dire qu'il n'y a pas de risque de violation des temps de transition Ton et Toff sur les transitions DN (signal continu actif S1 vers le signal cyclique S) et DF (signal continu inactif S0 vers le signal cyclique S) de la table de commandes et cela en fonction de la position courante du moteur et de la transition à venir.
Sinon:
- le signal de sortie S51 n'est pas actualisé tant que les deux conditions précédentes ne sont pas remplies. Le changement de position moteur n'est donc pas pris en compte.

Ce signal de sortie est également envoyé vers une unité de commande U60. Cette unité applique la table de commandes TC, en fonction de la position du moteur donnée par le signal S51. L'utilisation du signal S51 garantit l'intégrité des commandes appliquées aux commutateurs, c'est-à-dire filtrées de tout risque de violation des temps de transition Ton ou Toff.

Cette unité U60 implémente un démultiplexeur et génère également le signal Sca. Ce signal contient 6 bits, un pour chacun des commutateurs. En fonction de la position du moteur donnée par le signal S51, le bit correspondant à un commutateur Ca qui est en cours de découpage (celui qui reçoit le signal cyclique S) est positionné à l'état actif, tous les autres bits à l'état inactif. Ainsi, le signal S51 permet de se positionner dans la table de commandes et dans une étape E61, l'envoi par l'unité U60 d'un ensemble de signaux commandes (S0, S1, ou S), correspondant au positionnement du moteur selon le signal S51, aux commutateurs.

En conséquence, la transmission du signal S51 permet de filtrer et/ou retarder les commandes des commutateurs correspondant à un changement de position de moteur, tant que ledit changement est susceptible d'induire une violation du temps d'ouverture ou de fermeture d'un des commutateurs.

Le procédé et le module de commande tels que décrits précédemment peuvent être avantageusement implémentés sur des micro-ordinateurs, microcontrôleurs, systèmes embarqués, des circuits logiques FPGA ou ASIC. Ledit procédé propose une solution d'implémentation basée uniquement sur des fonctions logiques simples, i.e. comparateurs, multiplexeurs/démultiplexeurs, compteurs/décompteurs, portes logiques et bascules. Le procédé propose donc une solution d'implémentation hardware universelle qui utilise des ressources logiques élémentaires présentes dans toutes les familles de circuit logique. Cette solution technique est donc transposable à tous type de FPGA ou ASIC quel que soit le fabricant du composant.

Le procédé permet donc une solution d'implémentation universelle dans sa compatibilité, par une simple reconfiguration, à toutes les tables de commande TC 120° imaginables.

Le procédé peut donc être appliqué simplement, rapidement, tout en assurant une fiabilité d'implémentation de nouvelles lois de commandes.

## Revendications

1. Procédé de commande d'un onduleur (18) configuré pour alimenter électriquement un moteur (12) comprenant un stator et un rotor adapté pour être entrainé en rotation relativement au stator lorsque le moteur (12) est alimenté électriquement, l'onduleur (18) comprenant une pluralité de commutateurs (30A, 32A, 34A, 30B, 32B, 34B) propres à être commandés en ouverture/fermeture pour la régulation de l'alimentation électrique du moteur (12), chaque commutateur (30A, 32A, 34A, 30B, 32B, 34B) présentant un temps de transition prédéterminé d'un état fermé vers un état ouvert (Toff), et un temps de transition prédéterminé de l'état ouvert vers l'état fermé prédéterminés (Ton), le procédé comprenant les étapes suivantes consistant à:
- générer un premier signal numérique continu (S1) présentant un premier niveau de tension propre à commander la fermeture d'un commutateur,
- générer un deuxième signal numérique continu (S0) présentant un deuxième niveau de tension propre à commander l'ouverture d'un commutateur,
- générer un troisième signal numérique cyclique (S) alternant entre le premier niveau de tension et le deuxième niveau de tension, propre à commander successivement l'ouverture et la fermeture d'un commutateur (30A, 32A, 34A, 30B, 32B, 34B),
- transmettre à chaque commutateur (30A, 32A, 34A, 30B, 32B, 34B) l'un des signaux numériques (S, S0, S1), conformément à une loi de commande dépendante d'une position du rotor relativement au stator ; **caractérisé en ce que** :
- lors d'un changement de position du rotor relativement au stator à un instant t0, retarder l'exécution de la loi de commande correspondant à la nouvelle position du rotor, depuis l'instant t0, tant que ladite exécution produirait une commande d'ouverture de l'un des commutateurs (30A, 32A, 34A, 30B, 32B, 34B) au cours d'une transition de l'état ouvert à l'état fermé (violation Ton) du commutateur (30A, 32A, 34A, 30B, 32B, 34B), ou une commande de fermeture de l'un des commutateurs (30A, 32A, 34A, 30B, 32B, 34B) au cours d'une transition de l'état fermé à l'état ouvert (violation Toff) du commutateur (30A, 32A, 34A, 30B, 32B, 34B).

2. Procédé de commande selon la revendication précédente, dans lequel conformément à la loi de commande, le troisième signal numérique cyclique (S) est transmis à au moins un commutateur de la pluralité de commutateurs.

3. Procédé de commande selon la revendication précédente, dans lequel l'exécution de la loi de commande est retardée si :
- l'un des commutateurs étant commandé par le premier signal numérique continu (S1), la loi de commande indique la transmission audit commutateur du troisième signal numérique cyclique (S), et à l'instant t0, ledit signal est égal au deuxième niveau de tension et dans un temps inférieur au temps de transition prédéterminé de l'état ouvert vers l'état fermé, égal au premier niveau de tension ; ou
- l'un des commutateurs étant commandé par le second signal numérique continu (S0), la loi de commande indique la transmission audit commutateur du troisième signal numérique cyclique (S), et à l'instant t0, ledit signal est égal au premier niveau de tension et dans un temps inférieur au temps de transition prédéterminé de l'état fermé vers l'état ouvert, égal au second niveau de tension ; ou
- l'un des commutateurs étant commandé par le troisième signal numérique cyclique (S), la loi de commande indique la transmission audit commutateur du premier signal numérique continu (S1), et à l'instant t0, ledit commutateur est en transition de l'état fermé vers l'état ouvert depuis un temps inférieur au temps de transition prédéterminé d'un état fermé vers un état ouvert (Toff); ou
- l'un des commutateurs étant commandé par le troisième signal numérique cyclique (S), la loi de commande indique la transmission audit commutateur du second signal numérique continu (S0), et à l'instant t0, ledit commutateur est en transition de l'état ouvert vers l'état fermé depuis un temps inférieur au temps de transition prédéterminé d'un état ouvert vers un état fermé (Ton).

4. Procédé de commande selon l'une quelconque des revendications précédentes, dans lequel, le troisième signal numérique cyclique (S) de commande est un signal à modulation de largeur d'impulsion.

5. Procédé de commande selon l'une quelconque des revendications précédentes, dans lequel chaque commutateur (30A, 32A, 34A, 30B, 32B, 34B) de l'onduleur est commandé par une loi de commande associée, ladite loi de commande étant une loi de commande à 120°.

6. Procédé de commande selon l'une quelconque des revendications précédentes, dans lequel le moteur comprend une pluralité de secteurs angulaires définis de manière fixe par rapport au stator et parcourus par le rotor lorsque le rotor est entrainé en rotation, et en ce que la détection du changement de position du rotor relativement au stator se produit à chaque changement de secteur angulaire.

7. Module de commande (20) d'un onduleur (18) configuré pour alimenter électriquement un moteur (12), l'onduleur (18) comprenant une pluralité de commutateurs (30A, 32A, 34A, 30B, 32B, 34B) commandés en ouverture/fermeture pour la régulation de l'alimentation électrique du moteur (12),
chaque commutateur (30A, 32A, 34A, 30B, 32B, 34B) présentant un temps de transition prédéterminé d'un état fermé vers un état ouvert (Toff), et un temps de transition prédéterminé de l'état ouvert vers l'état fermé (Ton),
le moteur (12) comprenant un stator et un rotor adapté pour être entraîné en rotation relative par rapport au stator,
ledit module de commande (20) étant adapté pour :
- générer un premier signal numérique continu (S1) présentant un premier niveau de tension propre à commander la fermeture d'un commutateur (30A, 32A, 34A, 30B, 32B, 34B),
- générer un deuxième signal numérique continu (S0) présentant un deuxième niveau de tension propre à commander l'ouverture d'un commutateur (30A, 32A, 34A, 30B, 32B, 34B),
- générer un troisième signal numérique cyclique (S) alternant entre le premier niveau de tension et le deuxième niveau de tension, propre à commander successivement la fermeture et l'ouverture d'un commutateur (30A, 32A, 34A, 30B, 32B, 34B), à une fréquence prédéterminée,
- transmettre à chaque commutateur (30A, 32A, 34A, 30B, 32B, 34B) l'un des signaux numériques (S, S0, S1), conformément à une loi de commande dépendante d'une position du rotor relativement au stator ;
ledit module de commande (20) étant en outre adapté pour détecter un changement de position du rotor relativement au stator, **caractérisé en ce que** ledit module de commande (20) étant configuré pour retarder l'exécution, depuis un instant t0 de détection du changement de position du rotor, de la loi de commande des commutateurs (30A, 32A, 34A, 30B, 32B, 34B) commandant, pour la nouvelle position du rotor, la transmission du troisième signal numérique cyclique (S) à un commutateur (30A, 32A, 34A, 30B, 32B, 34B), et la transmission du premier ou deuxième signal à un autre commutateur (30A, 32A, 34A, 30B, 32B, 34B), tant que ladite exécution produirait une commande d'ouverture de l'un des commutateurs (30A, 32A, 34A, 30B, 32B, 34B) au cours d'une transition de l'état ouvert à l'état fermé (violation Ton) du commutateur (30A, 32A, 34A, 30B, 32B, 34B), ou une commande de fermeture de l'un des commutateurs (30A, 32A, 34A, 30B, 32B, 34B) au cours d'une transition de l'état fermé à l'état ouvert (violation Toff) du commutateur (30A, 32A, 34A, 30B, 32B, 34B).

8. Système d'alimentation électrique (10) d'un moteur (12), ledit moteur (12) comprenant un stator et un rotor monté rotatif par rapport au stator, le système d'alimentation (10) comprenant :
- un onduleur (18), comprenant une pluralité de commutateurs (30A, 32A, 34A, 30B, 32B, 34B) commandés pour la régulation de l'alimentation électrique du moteur (12),
- un module de commande de l'onduleur (20), et
- un capteur (22) propre à mesurer une position du rotor relativement au stator, ledit module de commande (20) étant un module de commande (20) selon la revendication 7.

9. Système d'alimentation (10) selon la revendication précédente, dans lequel l'onduleur (18) est un onduleur triphasé.

10. Système d'alimentation (10) selon la revendication précédente, dans lequel le module de commande est adapté pour identifier un secteur angulaire du moteur (12) dans lequel est localisé le rotor en fonction de la position mesurée par le capteur, et en ce que le module de commande (20) est adapté pour détecter un changement de position lorsque le rotor change de secteur angulaire.

## Patentansprüche

1. Verfahren zur Steuerung eines Umrichters (18), der ausgelegt ist, um einen Motor (12) elektrisch zu versorgen, der einen Stator und einen Rotor umfasst, der geeignet ist, relativ zum Stator rotatorisch angetrieben zu werden, wenn der Motor (12) elektrisch versorgt wird, wobei der Umrichter (18) eine Vielzahl von Schaltern (30A, 32A, 34A, 30B, 32B, 34B) umfasst, die imstande sind, gesteuert zu werden, dass sie für die Regulierung der elektrischen Versorgung des Motors (12) öffnen/schließen, wobei jeder Schalter (30A, 32A, 34A, 30B, 32B, 34B) eine vorher festgelegte Übergangszeit von einem geschlossenen Zustand in einen geöffneten Zustand (Toff) und eine vorher festgelegte Übergangszeit von dem vorher festgelegten geöffneten Zustand in den vorher festgelegten geschlossenen Zustand (Ton) aufweist, wobei das Verfahren die folgenden Schritte umfasst, die bestehen im:
- Generieren eines ersten kontinuierlichen digitalen Signals (S1), aufweisend ein erstes Spannungsniveau, das imstande ist, das Schließen eines Schalters zu steuern,
- Generieren eines zweiten kontinuierlichen digitalen Signals (S0), aufweisend ein zweites Spannungsniveau, das imstande ist, das Öffnen eines Schalters zu steuern,
- Generieren eines dritten zyklischen digitalen Signals (S), das zwischen dem ersten Spannungsniveau und dem zweiten Spannungsniveau alterniert, das imstande ist, das Öffnen und das Schließen eines Schalters (30A, 32A, 34A, 30B, 32B, 34B) aufeinanderfolgend zu steuern,
- Übertragen, an jeden Schalter (30A, 32A, 34A, 30B, 32B, 34B), eines der digitalen Signale (S, S0, S1) gemäß einer Steuerungsgesetzmäßigkeit, die von einer Position des Rotors relativ zum Stator abhängt; **dadurch gekennzeichnet, dass**
- bei einer Änderung der Position des Rotors relativ zum Stator zu einem Zeitpunkt t0 die Ausführung der Steuerungsgesetzmäßigkeit, die der neuen Position des Rotors entspricht, ab dem Zeitpunkt t0 solange verzögert wird, wie die Ausführung eine Steuerung des Öffnens von einem der Schalter (30A, 32A, 34A, 30B, 32B, 34B) während eines Übergangs aus dem geöffneten Zustand in den geschlossenen Zustand (Verletzung Ton) des Schalters (30A, 32A, 34A, 30B, 32B, 34B), oder eine Steuerung des Schließens von einem der Schalter (30A, 32A, 34A, 30B, 32B, 34B) während eines Übergangs aus dem geschlossenen Zustand in den geöffneten Zustand (Verletzung Toff) des Schalters (30A, 32A, 34A, 30B, 32B, 34B) bewirkt.

2. Steuerungsverfahren nach vorangehendem Anspruch, wobei gemäß der Steuerungsgesetzmäßigkeit das dritte zyklische digitale Signal (S) an mindestens einen Schalter von der Vielzahl von Schaltern übertragen wird.

3. Steuerungsverfahren nach vorangehendem Anspruch, wobei die Ausführung der Steuerungsgesetzmäßigkeit verzögert wird, wenn:
- wobei einer der Schalter von dem ersten kontinuierlichen digitalen Signal (S1) gesteuert wird, die Steuerungsgesetzmäßigkeit dem Schalter die Übertragung des dritten zyklischen digitalen Signals (S) anzeigt, und das Signal zum Zeitpunkt t0 gleich dem zweiten Spannungsniveau und in einer Zeit, die kürzer als die vorher festgelegte Übergangszeit aus dem geöffneten Zustand in den geschlossenen Zustand ist, gleich dem ersten Spannungsniveau ist; oder
- wobei einer der Schalter von dem zweiten kontinuierlichen digitalen Signal (S0) gesteuert wird, die Steuerungsgesetzmäßigkeit dem Schalter die Übertragung des dritten zyklischen digitalen Signals (S) anzeigt, und das Signal zum Zeitpunkt t0 gleich dem ersten Spannungsniveau und in einer Zeit, die kürzer als die vorher festgelegte Übergangszeit aus dem geschlossenen Zustand in den geöffneten Zustand ist, gleich dem zweiten Spannungsniveau ist; oder
- wobei einer der Schalter von dem dritten zyklischen digitalen Signal (S) gesteuert wird, die Steuerungsgesetzmäßigkeit dem Schalter die Übertragung des ersten kontinuierlichen digitalen Signals (S1) anzeigt, und der Schalter zum Zeitpunkt t0 im Übergang aus dem geschlossenen Zustand in den geöffneten Zustand seit einer Zeit ist, die kürzer als die vorher festgelegte Übergangszeit aus einem geschlossenen Zustand in einen geöffneten Zustand (Toff) ist; oder
- wobei einer der Schalter von dem dritten zyklischen digitalen Signal (S) gesteuert wird, die Steuerungsgesetzmäßigkeit dem Schalter die Übertragung des zweiten kontinuierlichen digitalen Signals (S0) anzeigt, und der Schalter zum Zeitpunkt t0 im Übergang aus dem geöffneten Zustand in den geschlossenen Zustand seit einer Zeit ist, die kürzer als die vorher festgelegte Übergangszeit aus einem geöffneten Zustand in einen geschlossenen Zustand (Ton) ist.

4. Steuerungsverfahren nach einem der vorangehenden Ansprüche, wobei das dritte zyklische digitale Steuerungssignal (S) ein Impulsbreitenmodulationssignal ist.

5. Steuerungsverfahren nach einem der vorangehenden Ansprüche, wobei jeder Schalter (30A, 32A, 34A, 30B, 32B, 34B) des Umrichters von einer zugeordneten Steuerungsgesetzmäßigkeit gesteuert wird, wobei die Steuerungsgesetzmäßigkeit eine 120°-Steuerungsgesetzmäßigkeit ist.

6. Steuerungsverfahren nach einem der vorangehenden Ansprüche, wobei der Motor eine Vielzahl von Winkelsektoren umfasst, die in Bezug auf den Stator fest festgelegt sind und von dem Rotor durchquert werden, wenn der Rotor rotatorisch angetrieben wird, und dass die Detektion der Änderung der Position des Rotors relativ zum Stator bei jeder Änderung des Winkelsektors erfolgt.

7. Modul zur Steuerung (20) eines Umrichters (18), das ausgelegt ist, um einen Motor (12) elektrisch zu versorgen, wobei der Umrichter (18) eine Vielzahl von Schaltern (30A, 32A, 34A, 30B, 32B, 34B) umfasst, die gesteuert werden, dass sie für die Regulierung der elektrischen Versorgung des Motors (12) öffnen/schließen,
wobei jeder Schalter (30A, 32A, 34A, 30B, 32B, 34B) eine vorher festgelegte Übergangszeit aus einem geschlossenen Zustand in einen geöffneten Zustand (Toff) und eine vorher festgelegte Übergangszeit aus dem geöffneten Zustand in den geschlossenen Zustand (Ton) aufweist,
wobei der Motor (12) einen Stator und einen Rotor umfasst, der geeignet ist, relativ in Bezug auf den Stator rotatorisch angetrieben zu werden,
wobei das Steuerungsmodul (20) geeignet ist:
- ein erstes kontinuierliches digitales Signal (S1) zu generieren, das ein erstes Spannungsniveau aufweist, das imstande ist, das Schließen eines Schalters (30A, 32A, 34A, 30B, 32B, 34B) zu steuern,
- ein zweites kontinuierliches digitales Signal (S0) zu generieren, das ein zweites Spannungsniveau aufweist, das imstande ist, das Öffnen eines Schalters (30A, 32A, 34A, 30B, 32B, 34B) zu steuern,
- ein drittes zyklisches digitales Signal (S) zu generieren, das zwischen dem ersten Spannungsniveau und dem zweiten Spannungsniveau alterniert, das imstande ist, das Schließen und das Öffnen eines Schalters (30A, 32A, 34A, 30B, 32B, 34B) mit einer vorher festgelegten Frequenz aufeinanderfolgend zu steuern,
- an jeden Schalter (30A, 32A, 34A, 30B, 32B, 34B) eins der digitalen Signale (S, S0, S1) gemäß einer Steuerungsgesetzmäßigkeit zu übertragen, die von einer Position des Rotors relativ zum Stator abhängt;
wobei das Steuerungsmodul (20) ferner geeignet ist, eine Änderung der Position des Rotors relativ zum Stator zu ermitteln,
**dadurch gekennzeichnet, dass**
das Steuerungsmodul (20) ausgelegt ist, um ab einem Detektionszeitpunkt t0 der Änderung der Position des Rotors die Ausführung der Steuerungsgesetzmäßigkeit der Schalter (30A, 32A, 34A, 30B, 32B, 34B), die für die neue Position des Rotors die Übertragung des dritten zyklischen digitalen Signals (S) an einen Schalter (30A, 32A, 34A, 30B, 32B, 34B), und die Übertragung des ersten oder zweiten Signals an einen anderen Schalter (30A, 32A, 34A, 30B, 32B, 34B) steuert, solange zu verzögern, wie die Ausführung eine Steuerung des Öffnens von einem der Schalter (30A, 32A, 34A, 30B, 32B, 34B) während eines Übergangs aus dem geöffneten Zustand in den geschlossenen Zustand (Verletzung Ton) des Schalters (30A, 32A, 34A, 30B, 32B, 34B), oder eine Steuerung des Schließens von einem der Schalter (30A, 32A, 34A, 30B, 32B, 34B) während eines Übergangs aus dem geschlossenen Zustand in den geöffneten Zustand (Verletzung Toff) des Schalters (30A, 32A, 34A, 30B, 32B, 34B) bewirkt.

8. System zur elektrischen Versorgung (10) eines Motors (12), wobei der Motor (12) einen Stator und einen Rotor umfasst, der in Bezug auf den Stator rotatorisch angebracht ist, wobei das Versorgungssystem (10) umfasst:
- einen Umrichter (18), der eine Vielzahl von Schaltern (30A, 32A, 34A, 30B, 32B, 34B) umfasst, die für die Regulierung der elektrischen Versorgung des Motors (12) gesteuert werden,
- ein Steuerungsmodul des Umrichters (20), und
- einen Sensor (22), der imstande ist, eine Position des Rotors relativ zum Stator zu messen, wobei das Steuerungsmodul (20) ein Steuerungsmodul (20) nach Anspruch 7 ist.

9. Versorgungssystem (10) nach vorangehendem Anspruch, wobei der Umrichter (18) ein Dreiphasen-Umrichter ist.

10. Versorgungssystem (10) nach vorangehendem Anspruch, wobei das Steuerungsmodul geeignet ist, einen Winkelsektor des Motors (12) zu identifizieren, in welchem der Rotor in Abhängigkeit von der von dem Sensor gemessenen Position lokalisiert ist, und dass das Steuerungsmodul (20) geeignet ist, eine Änderung der Position zu ermitteln, wenn der Rotor den Winkelsektor wechselt.

## Claims

1. A method for controlling an inverter (18) configured to power supply a motor (12) comprising a stator and a rotor adapted to be driven in rotation relative to the stator when the motor (12) is power supplied, the inverter (18) comprising a plurality of switches (30A, 32A, 34A, 30B, 32B, 34B) suitable for being controlled to open/close in order to regulate the power supply of the motor (12), each switch (30A, 32A, 34A, 30B, 32B, 34B) having a predetermined time of transition from a closed state to an open state (Toff), and a predetermined time of transition from the open state to the predetermined closed state (Ton), the method comprising the following steps of:
- generating a first DC digital signal (S1) having a first voltage level suitable for controlling the closing of a switch,
- generating a second DC digital signal (S0) having a second voltage level suitable for controlling the opening of a switch,
- generating a third cyclic digital signal (S) alternating between the first voltage level and the second voltage level, suitable for controlling successively the opening and the closing of a switch (30A, 32A, 34A, 30B, 32B, 34B),
- transmitting to each switch (30A, 32A, 34A, 30B, 32B, 34B) one of the digital signals (S, S0, S1), in accordance with a control law based on a position of the rotor relative to the stator; **characterized in that**:
- during a change in the position of the rotor relative to the stator at an instant t0, delaying the execution of the control law corresponding to the new position of the rotor, from the instant t0, as long as said execution would produce a command to open one of the switches (30A, 32A, 34A, 30B, 32B, 34B) during a transition from the open state to the closed state (Ton violation) of the switch (30A, 32A, 34A, 30B, 32B, 34B), or a command to close one of the switches (30A, 32A, 34A, 30B, 32B, 34B) during a transition from the closed state to the open state (Toff violation) of the switch (30A, 32A, 34A, 30B, 32B, 34B).

2. The control method according to the preceding claim, wherein in accordance with the control law, the third cyclic digital signal (S) is transmitted to at least one switch of the plurality of switches.

3. The control method according to the preceding claim, wherein the execution of the control law is delayed if:
- one of the switches being controlled by the first DC digital signal (S1), the control law indicates the transmission to said switch of the third cyclic digital signal (S), and at the instant t0, said signal is equal to the second voltage level and in a time smaller than the predetermined time of transition from the open state to the closed state, equal to the first voltage level; or
- one of the switches being controlled by the second DC digital signal (S0), the control law indicates the transmission to said switch of the third cyclic digital signal (S), and at the instant t0, said signal is equal to the first voltage level and in a time smaller than the predetermined time of transition from the closed state to the open state, equal to the second voltage level; or
- one of the switches being controlled by the third cyclic digital signal (S), the control law indicates the transmission to said switch of the first DC digital signal (S1), and at the instant t0, said switch is in transition from the closed state to the open state from a time smaller than the predetermined time of transition from a closed state to an open state (Toff); or
- one of the switches being controlled by the third cyclic digital signal (S), the control law indicates the transmission to said switch of the second DC digital signal (S0), and at the instant t0, said switch is in transition from the open state to the closed state from a time smaller than the predetermined time of transition from an open state to a closed state (Ton).

4. The control method according to any of the preceding claims, wherein the third cyclic digital control signal (S) is a pulse width modulated signal.

5. The control method according to any of the preceding claims, wherein each switch (30A, 32A, 34A, 30B, 32B, 34B) of the inverter is controlled by an associated control law, said control law being a 120° control law.

6. The control method according to any of the preceding claims, wherein the motor comprises a plurality of angular sectors defined in a stationary manner relative to the stator and through which the rotor passes when the rotor is driven in rotation, and in that the detection of the change in the position of the rotor relative to the stator occurs at each angular sector change.

7. A module (20) for controlling an inverter (18) configured to power supply a motor (12), the inverter (18) comprising a plurality of switches (30A, 32A, 34A, 30B, 32B, 34B) controlled to open/close in order to regulate the power supply to the motor (12),
each switch (30A, 32A, 34A, 30B, 32B, 34B) having a predetermined time of transition from a closed state to an open state (Toff), and a predetermined time of transition from the open state to the closed state (Ton),
the motor (12) comprising a stator and a rotor adapted to be driven in rotation relative to the stator,
said control module (20) being adapted to:
- generate a first DC digital signal (S1) having a first voltage level suitable for controlling the closing of a switch (30A, 32A, 34A, 30B, 32B, 34B),
- generate a second DC digital signal (S0) having a second voltage level suitable for controlling the opening of a switch (30A, 32A, 34A, 30B, 32B, 34B),
- generate a third cyclic digital signal (S) alternating between the first voltage level and the second voltage level, suitable for controlling successively the closing and the opening of a switch (30A, 32A, 34A, 30B, 32B, 34B), at a predetermined frequency,
- transmit to each switch (30A, 32A, 34A, 30B, 32B, 34B) one of the digital signals (S, S0, S1), in accordance with a control law based on a position of the rotor relative to the stator;
said control module (20) being further adapted to detect a change in the position of the rotor relative to the stator,
**characterized in that**
said control module (20) being configured to delay the execution, from an instant t0 of detecting the change in the position of the rotor, of the control law of the switches (30A, 32A, 34A, 30B, 32B, 34B) controlling, for the new position of the rotor, the transmission of the third cyclic digital signal (S) to a switch (30A, 32A, 34A, 30B, 32B, 34B), and the transmission of the first or of the second signal to another switch, (30A, 32A, 34A, 30B, 32B, 34B) as long as said execution would produce a command to open one of the switches (30A, 32A, 34A, 30B, 32B, 34B) during a transition from the open state to the closed state (Ton violation) of the switch (30A, 32A, 34A, 30B, 32B, 34B), or a command to close one of the switches (30A, 32A, 34A, 30B, 32B, 34B) during a transition from the closed state to the open state (Toff violation) of the switch (30A, 32A, 34A, 30B, 32B, 34B) .

8. A system (10) for power supplying a motor (12), said motor (12) comprising a stator and a rotor rotatably mounted relative to the stator, the supply system (10) comprising:
- an inverter (18), comprising a plurality of switches (30A, 32A, 34A, 30B, 32B, 34B) controlled in order to regulate the power supply of the motor (12),
- an inverter control module (20), and
- a sensor (22) suitable for measuring a position of the rotor relative to the stator, said control module (20) being a control module (20) according to claim 7.

9. The power supply system (10) according to the preceding claim, wherein the inverter (18) is a three-phase inverter.

10. The power supply system (10) according to the preceding claim, wherein the control module is adapted to identify an angular sector of the motor (12) in which the rotor is located based on the position measured by the sensor, and in that the control module (20) is adapted to detect a position change when the rotor changes its angular sector.
